# FASCICULE DE BREVET EUROPEEN

(11) **EP 1 149 014 B1**
(45) Date de publication et mention de la délivrance du brevet: **11.06.2003**
(21) Numéro de dépôt: 00902699.8
(22) Date de dépôt: 02.02.2000
(51) Int. Cl.: B62K 19/16

(54) **CADRE DE CYCLE EN MATERIAU THERMOPLASTIQUE ET PROCEDE DE FABRICATION ASSOCIE**
THERMOPLASTISCHER FAHRRADRAHMEN UND VERFAHREN ZUM HERSTELLEN DESSELBEN
BICYCLE FRAME IN THERMOPLASTIC MATERIAL AND METHOD FOR MAKING SAME

(30) Priorité: 03.02.1999 FR 9901413
(43) Date de publication de la demande: 31.10.2001
(73) Titulaire: Bird, 74375 Le Bourget-du-Lac (FR)
(72) Inventeur: GUICHARD, Alexandre, F-73100 Tresserve (FR); PIROT, Roger, F-69002 Lyon (FR); LEGEROT, Gérard, F-73100 Aix les Bains (FR)
(74) Mandataire: Gasquet, Denis
(86) Numéro de dépôt international: FR0000247
(87) Numéro de publication internationale: WO00046098

(56) Documents cités:
- EP-A- 0 829 421
- WO-A-92/02357
- US-A- 5 803 476

## Description

La présente invention concerne un cadre de cycle, elle concerne également le procédé de fabrication et d'assemblage associé au cadre de l'invention.

Depuis longtemps, les cadres de cycle sont principalement réalisés par l'assemblage de tubes métalliques par soudage, brasage ou collage, par exemple. Toutefois, si les caractéristiques mécaniques obtenues semblent satisfaisantes, les coûts liés au temps de production nécessaire à la fabrication des tubes et à leur assemblage sont très importants. De plus, ces matériaux métalliques nécessitent une décoration et une protection contre la corrosion qui augmentent encore le nombre d'opérations et donc le coût de production des cadres de cycle.

D'autres cadres sont actuellement réalisés en matériaux composites à base de carbone ou de fibre de verre. Toutefois, les caractéristiques mécaniques obtenues ne sont pas suffisantes et les dimensions des tubes ou des profilés doivent être augmentées pour obtenir des caractéristiques intéressantes au détriment de l'aspect du cadre notamment ainsi que de son poids.

On connait aussi par le brevet américain US-A-5803476, un cadre de vélo constitué par un ensemble de profilés longitudinaux reliés entre-eux par des raccords, les profilés étant réalisés en polymère thermoplastique enroulés à partir d'un tissu tressé. Ce type de technologie est certes un perfectionnement par rapport au cadre fabriqué selon les procédés autérieurs, mais n'est pas toutefois totalement parfait.

L'invention a pour objectif de permettre la fabrication et l'assemblage d'un cadre de cycle de manière rapide et simple en réduisant considérablement le nombre d'opérations et leurs temps respectifs, tout en conservant des caractéristiques mécaniques aux cadres supérieures ou pour le moins égales à celles des cadres métalliques haut de gamme. Elle permet également de réaliser un cadre dont les formes peuvent être aisément modulables pour pouvoir modifier son aspect extérieur sans modifier ses caractéristiques mécaniques intrinsèques. Elle permet de plus d'obtenir, à caractéristiques mécaniques égales, par rapport aux cadres de cycle de l'art antérieur et notamment les cadres métalliques, un gain de poids qui peut atteindre les 50 % environ.

Ainsi, selon sa caractéristique principale, le cadre de cycle du type constitué par un ensemble de profilés longitudinaux reliés entre eux par des raccords, est caractérisé en ce que les profilés longitudinaux sont réalisés en polymère thermoplastique moulés à partir d'un tissu tressé à partir de mèches formées de fils de thermoplastique continus disposés en hélicoïde autour de fils thermoplastiques parallèles discontinus.

Selon une autre caractéristique du cadre de cycle, le polymère thermoplastique comporte des renforts constitués par des fils en carbone, en verre ou en aramide disposés entre les fils de thermoplastiques parallèles discontinus pour être emprisonnés par les fils thermoplastiques disposés en hélicoïde de manière à former les mèches

Selon une caractéristique complémentaire du cadre de cycle selon l'invention, le polymère thermoplastique tressé est choisi parmi
- le Polyamide 12
- le Polyamide 6
- le Polyamide 6.6
- le Polypropylène
- le Polyethersulfone
- le Polyetherimide
- le Polyetherethercétone
- le Polyphérylène sulfide
- les Polyesters.

Selon une autre caractéristique, le tissu est tressé pour former des gaines en fils de thermoplastique, tressées, souples et déformables.

Selon un mode de réalisation du cadre de cycle, les profilés longitudinaux sont réalisés par l'assemblage de plusieurs gaines thermoplastiques de manière coaxiale à l'intérieur l'une de l'autre.

Selon une caractéristique complémentaire du cadre de cycle selon l'invention. les profilés longitudinaux sont constitués par moulage de plusieurs ensembles de gaines disposés côte à côte.

Selon une variante d'exécution du cadre de cycle, la forme et/ou les dimensions de la section transversale des profilés longitudinaux varie(nt) longitudinalement le long desdits profilés.

Selon une autre caractéristique du cadre de cycle, la longueur des fils thermoplastiques parallèles discontinus est comprise entre 60 et 200 mm.

Par ailleurs, l'invention concerne également les procédés de fabrication des cadres de cycle et des profilés .

Ainsi selon une caractéristique du procédé de fabrication d'un cadre de cycle selon l'invention, celui-ci est caractérisé en ce qu'il comporte une étape principale qui consiste à réaliser les profilés longitudinaux en moulant à chaud un tissu thermoplastique.

Selon une autre caractéristique, le procédé de fabrication d'un cadre de cycle comporte une étape préliminaire qui consiste à enfiler des gaines en tissu thermoplastique autour d'une baudruche gonflable pour permettre lors de l'étape principale un moulage à chaud et sous pression du tissu pour réaliser les profilés longitudinaux.

De plus, le procédé de fabrication d'un cadre de cycle consiste à réaliser séparément les profilés longitudinaux et les raccords avant de les assembler dans une étape finale.

Selon une autre caractéristique du procédé de fabrication d'un cadre de cycle, la réalisation des profilés longitudinaux et leur assemblage à l'aide des raccords s'effectue en une seule et unique opération principale.

Selon un autre procédé de fabrication d'un cadre de cycle, l'opération principale consiste à disposer dans un moule des raccords préexistants pour ensuite mouler à chaud dans ledit moule les profilés longitudinaux en les assemblant simultanément aux raccords.

D'autres caractéristiques et avantages de l'invention se dégageront de la description qui va suivre en regard des dessins annexés qui ne sont donnés qu'à titre d'exemples non limitatifs.

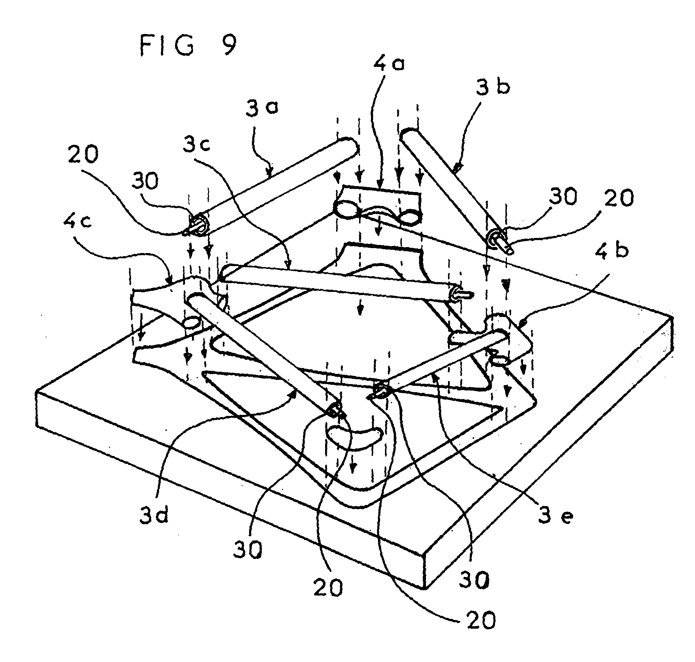

Les figures 1 à 11 illustrent des modes de réalisation du cadre de cycle selon l'invention et son procédé de fabrication et d'assemblage associé.

La figure 1 représente en vue latérale un cadre de cycle.

Les figures 2a, 2b, 2c illustrent en coupe transversale respectivement selon AA, BB et CC un exemple de profil des profilés longitudinaux du cadre.

Les figures 3a, 3b et 3c illustrent des variantes d'exécution des profilés longitudinaux en coupe transversale.

La figure 4a illustre en coupe transversale un ensemble de gaines en tissu thermoplastique avant le moulage à chaud.

La figure 4b montre en vue latérale l'assemblage des gaines destinées à former un profilé.

La figure 4c illustre dans une vue similaire à la figure 4b une variante d'exécution de l'assemblage des gaines.

La figure 5 montre une variante d'exécution du tissu thermoplastique formant le profilé en coupe transversale avant le moulage à chaud.

Les figures 6a et 6b représentent respectivement en coupe transversale deux modes de réalisation différents des profilés longitudinaux.

La figure 7 illustre le moulage à chaud des profilés longitudinaux en coupe transversale.

Les figures 8a et 8b illustrent en vue latérale l'assemblage des profilés et des raccords pour le premier procédé de fabrication du cadre.

La figure 9 montre en perspective l'opération principale d'un deuxième procédé de fabrication.

La figure 10 illustre en perspective le détail d'une mèche en thermoplastique.

La figure 11 représente en perspective une variante d'exécution d'un profilé.

Le cadre du cycle selon l'invention, portant la référence générale (1) est du type constitué par un ensemble de profilés longitudinaux (3) reliés entre eux par des raccords (4) de manière à former un ensemble rigide sur lequel sont destinés à être montés ensemble des accessoires habillant le cycle. Le cadre (1) peut être de tout type et être destiné au loisir comme à la compétition, au cyclisme sur route, sur piste ou sur d'autres terrains. Ainsi, le cadre (1) selon l'invention peut être. un cadre de type classique masculin ou féminin ou un cadre de vélo tout terrain, ou même un cadre de tandem, par exemple.

Selon l'invention, le cadre de cycle (1) et plus précisément les profilés longitudinaux (3) qui le constituent sont réalisés en polymères thermoplastiques moulés à partir d'un tissu tressé.

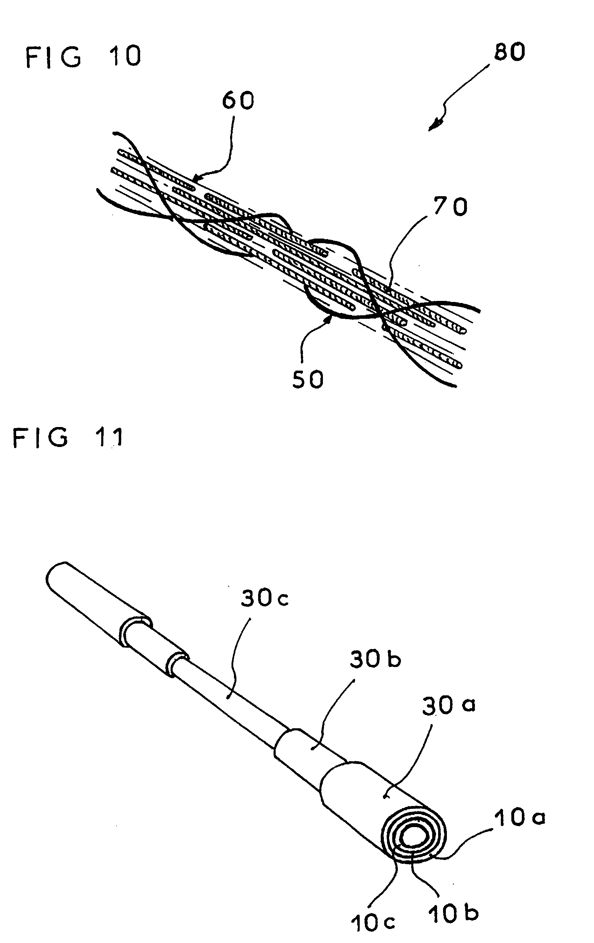

Ainsi, les profilés (3) sont obtenus en moulant un tissu ou une gaine, tressé(e) à partir de mèches en thermoplastique (80), c'est à dire des mèches formées de fils de thermoplastique continus disposés en hélicoïde (50) autour de fils thermoplastiques parallèles discontinus (60). Ces mèches (80) peuvent avantageusement être réalisées en thermoplastique chargé, c'est à dire que les fils de thermoplastique parallèles (60) sont mélangées à des fils de carbone, verre ou aramide (70) pour être emprisonnés par les fils thermoplastiques disposés en hélicoïde (50) comme le montre la figure 10. Les fils de carbone, de verre ou d'aramide ainsi que les fils de thermoplastiques paralèlles discontinus (60) constituent ainsi les renforts de la matrice constituée de thermoplastique ; leur longueur est avantageusement comprise entre 60 et 200 mm par exemple.

Selon les différents modes de réalisation du cadre, le matériau thermoplastique tressé destiné à être moulé est choisi parmi les thermoplastiques suivants :
- Polyamide 12 (PA12)
- Polyamide 6 (PA6)
- Polyamide 6.6 (PA6.6)
- Polypropylène (PP)
- Polyethersulfone (PES)
- Polyetherimide (PEI)
- Polyetherethercétone (PEEK)
- Polyphérylène sulfide (PPS)
- Polyesters, comme par exemple le Polybutylenetéréphtalate (PBT) ou le Polytéréphtalate d'éthylène (PET).

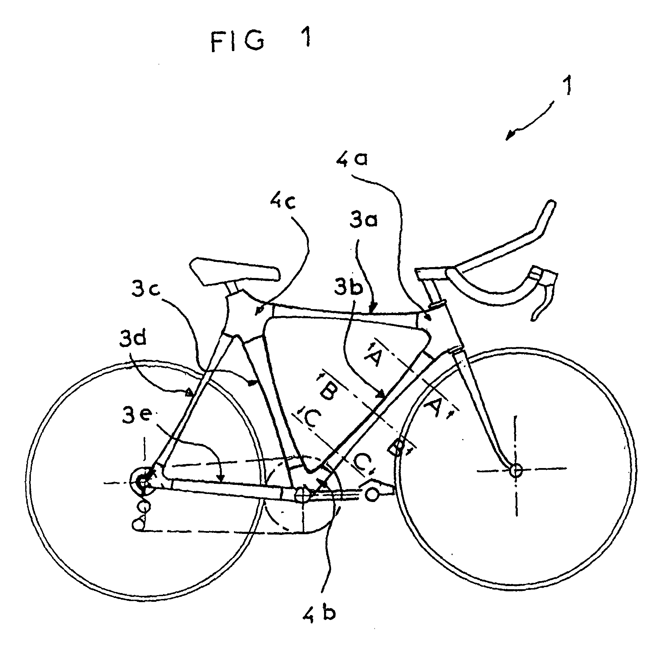

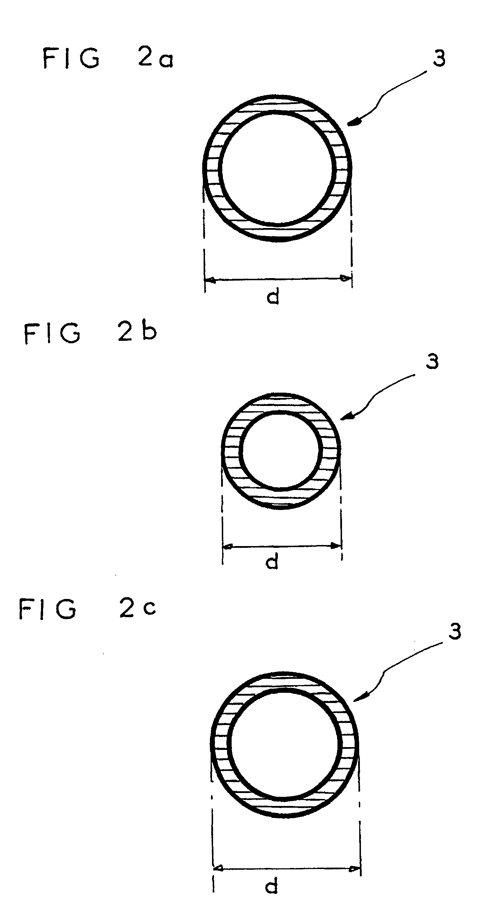

Selon un premier mode de réalisation du cadre de cycle (1) illustré figure 1, celui-ci comporte cinq profilés longitudinaux (3a, 3b, 3c, 3d, 3e) assemblés par trois raccords (4a, 4b, 4c), par exemple. Le profil transversal des différents profilés est avantageusement de forme circulaire pour former des tubes creux résistants et légers. Notons toutefois que l'utilisation de tissus thermoplastiques moulés permet d'obtenir des profilés dont la forme et les dimensions peuvent varier longitudinalement. Ainsi, comme le montrent les profils transversaux d'une variante d'exécution illustrés figures 2a à 2c, le diamètre (d) des profilés longitudinaux (3) est variable et peut s'élargir au niveau des raccords pour présenter un diamètre minimal dans la zone centrale des profilés, avantageusement en leur milieu. Toutefois, il pourrait en être autrement et la variation du diamètre des profilés pourrait présenter une configuration différente comme, par exemple, s'élargir dans la zone centrale, sans pour autant sortir du champ de protection de l'invention.

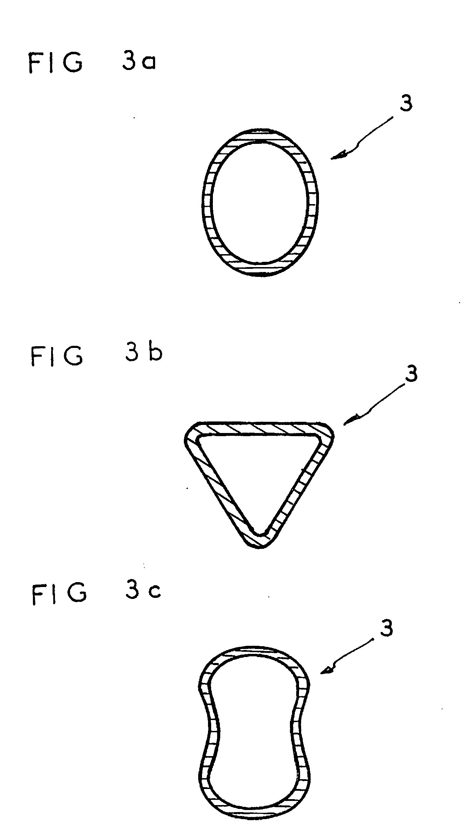

Selon plusieurs variantes d'exécution illustrées figures 3a à 3c, les profilés longitudinaux (3) présentent des formes non tubulaires comme, par exemple, des profils transversaux ovoïdes ou autres. De plus, les dimensions de la section transversale desdits profilés peuvent évoluer longitudinalement, de même que leur forme. Ainsi un profilé peut présenter un profil circulaire à ses extrémités pour favoriser sa soudure avec les raccords et présenter un profil ovoïde dans sa zone centrale.

Selon le mode de réalisation préféré du cadre de cycle (1) selon l'invention, la matière formant les profilés longitudinaux (3) possède, une fois moulée, une densité inférieure à 1, 5 g/ cm³. De plus, son module de traction et ses modules de flexion mesurés en longitudinal ou en transversal sont tous deux supérieurs à 45 000 MPa. Par ailleurs, cette matière est résistante aux chocs et présente une énergie de fracture supérieure à 1,5 Kj/cm² pour l'initiation de la fissure et supérieure à 4 Kj/cm² pour la propagation de la fissure.

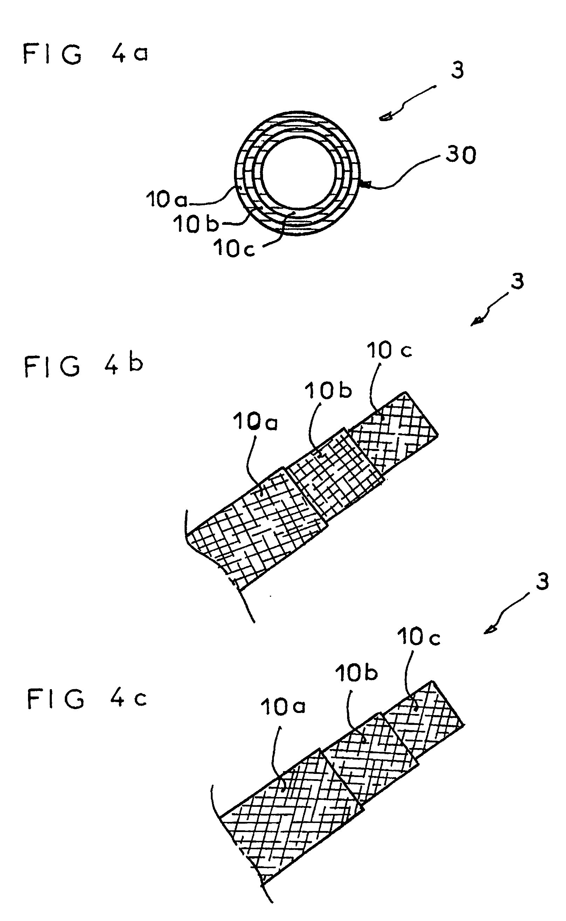

Selon le mode de réalisation préféré du cadre de cycle (1), les profilés longitudinaux (3) sont formés par le moulage d'un assemblage (30) de plusieurs gaines tubulaires en tissus thermoplastiques tressés (10a, 10b, 10c) ou manchons, comme le montre la figure 4a, lesdites gaines étant de formes cylindriques, enfilées respectivement l'une sur l'autre pour être coaxiales avant d'être moulées ensemble selon les procédés de fabrication décrits ci-après. Les gaines thermoplastiques assemblées sont avantageusement identiques et sont tissées ou tressées de manière à présenter une orientation des mèches (80) similaires, comme le montre la figure 4c. Toutefois, il pourrait en être autrement comme le montre la variante d'exécution illustrée figure 4b et les mèches et fils de renforts pourraient présenter une orientation différente de manière à obtenir des caractéristiques mécaniques différentes selon la direction des sollicitations.

On peut noter, comme le montre la variante d'exécution illustrée figure 11, qu'un même profilé (3) peut comporter une épaisseur variable sur sa longueur en utilisant un nombre de gaines assemblées (10a, 10b, 10c) différent. Ainsi, le profilé (3) comporte une partie renforcée (30a) munie de trois gaines suivie d'une partie (30b) qui ne comporte que deux gaines et d'une partie (30c) qui ne comporte qu'une seule gaine par exemple. Notons que ces gaines complémentaires qui forment des renforts du profilés peuvent être disposés à l'extérieur comme le montre la figure 11 mais également à l'intérieur de manière à obtenir un section externe du profilé constante. De plus les parties renforcées du profilé peuvent être disposées à l'endroit voulu comme par exemple aux extrémités ou au centre.

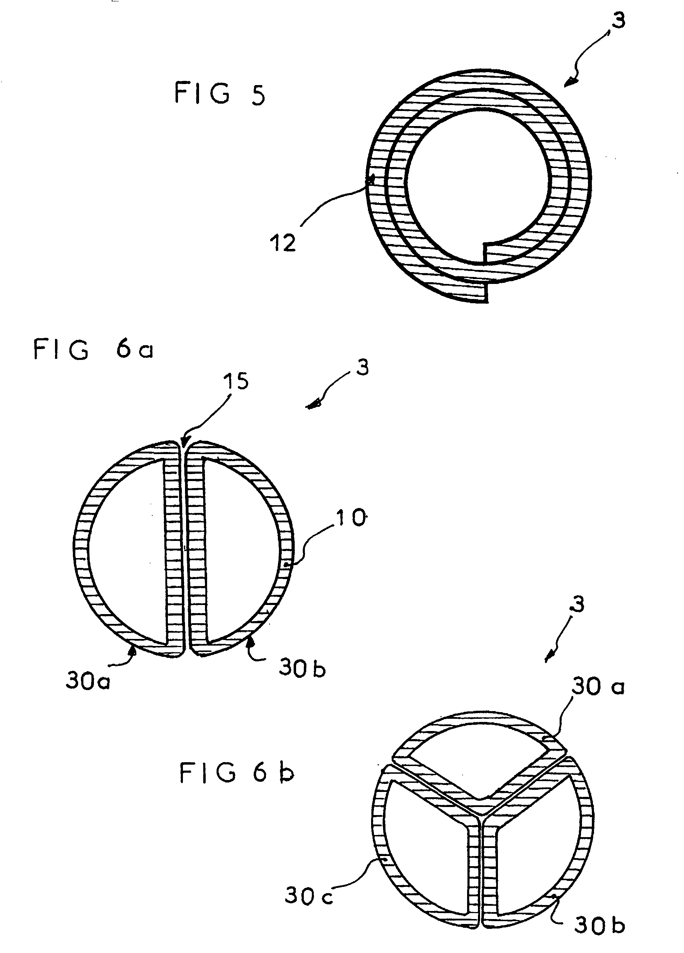

Selon un autre mode de réalisation du cadre de cycle (1), les profilés longitudinaux (3) sont moulés à partir d'un tissu en thermoplastique (12) enroulé sur lui-même comme le montre la figure 5.

Par ailleurs, selon une variante d'exécution illustrée figure 6a, les profilés longitudinaux (3) sont formés par plusieurs gaines tubulaires (10), lesdites gaines n'étant pas disposées coaxialement mais de manière à former au moins deux ensembles de gaines (30a, 30b) disposés côte à côte pour être moulés ensemble. Ainsi, une fois moulés, la section transversale des profilés (3) présente une nervure centrale (15) de manière à renforcer leur rigidité. Notons que les profilés (3) pourraient être formés de trois ensembles de gaines (30a, 30b, 30c) ou plus, comme le montre la figure 6b.

Il est important de noter que les profilés (3) sont moulés à partir de tissus en matière thermoplastique (12) ou de gaines tressées (10) molles, souples et déformables de manière à permettre une mise en oeuvre aisée dans les procédés de fabrication du cadre ainsi qu'une grande malléabilité pour pouvoir s'adapter à toutes les configurations choisies.

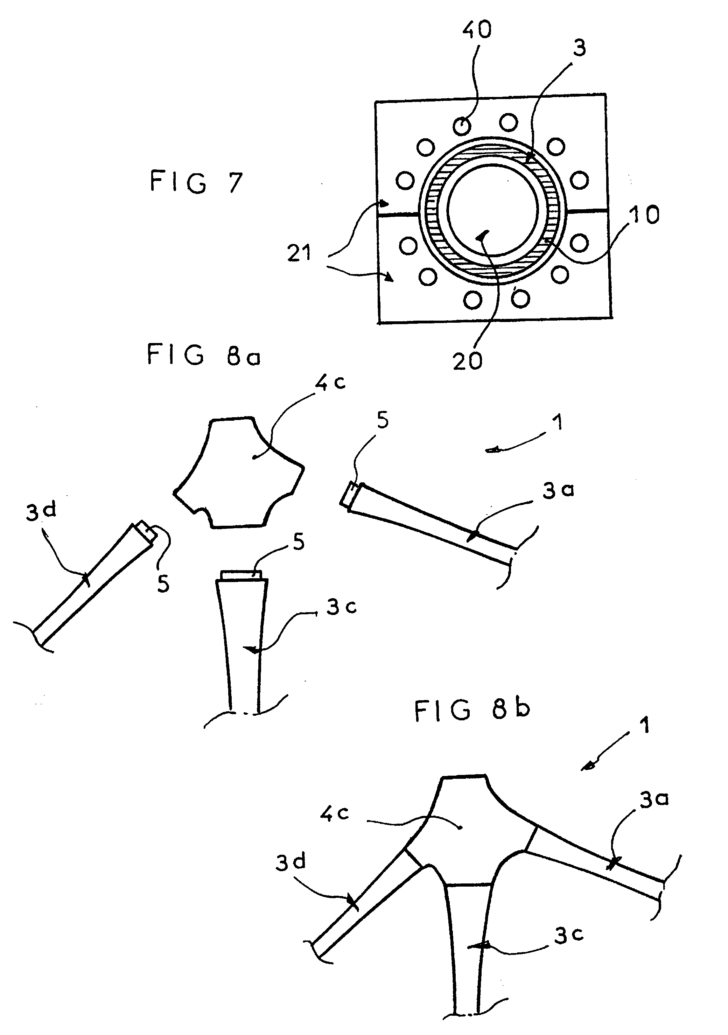

Par ailleurs, l'invention concerne également le procédé de fabrication du cadre de cycle (1), celui-ci consiste à réaliser les profilés longitudinaux (3) par moulage à chaud d'un tissu thermoplastique, avantageusement une gaine ou une tresse en thermoplastique (10). Le moulage s'effectue avantageusement à chaud dans un moule (21) en appliquant une pression au thermoplastique (10) à l'aide d'une baudruche gonflable (20) disposée à l'intérieur de la gaine thermoplastique, comme le montre la figure 7 puis en refroidissant la matière une fois celle-ci compactée.

Selon un premier procédé de fabrication des profilés longitudinaux (3) du cadre (1), l'étape préliminaire consiste à enfiler une ou plusieurs couches de gaine cylindrique tressée (10a, 10b, 10c) en fil thermoplastique autour d'une baudruche (20) gonflable ou à enrouler autour de ladite baudruche un tissu tressé (12). L'étape principale consiste à chauffer la matière (10, 12) directement ou par l'intermédiaire du moule (21) en mettant la baudruche (20) sous pression pour plaquer les gaines ou le tissus thermoplastiques contre les parois internes de l'empreinte du moule (21). Suite à l'étape principale, une étape secondaire consiste à refroidir la matière (10) avant de démouler le profilé longitudinal (3) obtenu.

Notons que le chauffage de la matière (10) ou du moule (21) s'effectue avantageusement par induction lors de l'étape principale en instaurant un champ magnétique. Le refroidissement de la matière s'effectue à l'aide d'un fluide réfrigérant ou cryogénique dans la masse du moule (21) ou dans un circuit de refroidissement (40) dudit moule.

Selon une variante du procédé de fabrication utilisé pour réaliser des profilés longitudinaux de forme conique, les gaines en tissu thermoplastique sont enfilées sur une broche de type conique réalisée en titane ou en aluminium, par exemple. L'ensemble est ensuite introduit dans la partie femelle du moule pour être mis en pression. Selon ce procédé, la matière est ensuite chauffée par des ultrasons véhiculés par la broche pour obtenir sa fusion. Il va de soi que la broche pourrait être de type inductif sans pour autant sortir du champ de protection de l'invention. De même, une baudruche gonflable peut être disposée autour de la broche et des gaines thermoplastiques pour ensuite être mise sous vide afin de mettre la matière sous pression tout en la chauffant

Selon le mode de réalisation préféré du cadre de cycle (1), les raccords (4a, 4b, 4c) sont réalisés également en matériau plastique et de préférence dans un matériau thermoplastique compatible avec celui des profilés longitudinaux (3a, 3b, 3c, 3d, 3e) pour permettre leur assemblage par soudure. Il va de soi que l'assemblage des raccords et des profilés longitudinaux pourrait s'effectuer à l'aide de moyens de liaison qui présentent une configuration différente, sans pour autant sortir du champ de protection de l'invention.

Le procédé d'assemblage des raccords (4a, 4b, 4c) et des profilés (3a, 3b, 3c, 3d, 3e) qui constitue l'étape finale du procédé de fabrication du cadre de cycle est avantageusement un procédé de soudure tel que de la soudure par induction. Ainsi, les raccords (4) ou les extrémités des profilés longitudinaux (5) comportent des inserts métalliques qui, placés dans un champ magnétique, permettent d'obtenir l'échauffement suffisant à la fusion locale des matériaux thermoplastiques pour réaliser la soudure. On peut également réaliser la soudure par vibration rotative ou par ultrason de manière connue en soi.

Ainsi, comme le montre la figure 8a et 8b le procédé de fabrication global du cadre (1) consiste à mouler les profilés longitudinaux (3) et les raccords (4) séparément avant de les assembler par soudure lors d'une étape finale, tel que précédemment décrit. Toutefois, selon un deuxième procédé de fabrication du cadre de cycle (1), la fabrication des profilés longitudinaux (3) et leur assemblage à l'aide des raccords (4) s'effectue lors d'une seule et même opération où les profilés sont réalisés par moulage à chaud et assemblés ensemble à l'aide de raccords réalisés préalablement.

Selon ce deuxième mode de fabrication, l'étape principale consiste à disposer dans un moule les raccords (4a, 4b, 4c) préexistants ainsi que les ensembles (30) de gaines tressées en tissus thermoplastique (10) enfilées autour de leurs baudruches gonflables (20) respectives de manière à obtenir lors du moulage à chaud et sous pression des profilés longitudinaux liés ou soudés directement aux raccords sans nécessiter d'opération d'assemblage complémentaire. Notons que la matière constituant les gaines (10) peut être chauffée directement par l'excitation moléculaire des fibres de carbone qu'elle contient à l'aide d'un champ magnétique. Une fois les raccords (4) et les ensembles gaines-baudruches mis en place, ceux-ci sont chauffés et les baudruches mises sous pression avant de procéder à l'étape secondaire de refroidissement par circulation d'un fluide réfrigérant, ainsi lors de l'étape principale, on moule les profilés (3) tout en les assemblant ensemble à l'aide des raccords.

## Revendications

1. Cadre de cycle (1) du type constitué par un ensemble de profilés longitudinaux (3) reliés entre eux par des raccords (4), lesdits profilés longitudinaux (3) étant en polymère thermoplastique moulé à partir d'un tissu, **caractérisé en ce que** ledit tissu (10) est un tissu tressé de mèches (80) comprenant des fils de thermoplastique continus disposés en hélicoïde (50) autour de fils thermoplastiques parallèles discontinus (60).

2. Cadre de cycle (1) selon la revendication 1, **caractérisé en ce que** le polymère thermoplastique comporte des renforts constitués par des fils en carbone, en verre ou en aramide (70) disposés entre les fils de thermoplastiques parallèles discontinus (60) emprisonnés par les fils thermoplastiques disposés en hélicoïde (50) formant les mèches.

3. Cadre de cycle (1) selon l'une quelconque des revendications précédentes, **caractérisé en ce que** le polymère thermoplastique tressé est choisi parmi :
- le Polyamide 12
- le Polyamide 6
- le Polyamide 6.6
- le Polypropylène
- le Polyethersulfone
- le Polyetherimide
- le Polyetherethercétone
- le Polyphérylène sulfide
- les Polyesters

4. Cadre de cycle (1) selon l'une quelconque des revendications précédentes, **caractérisé en ce que** le tissu (10) est tressé pour former des gaines en fils de thermoplastique tressées (10a, 10b, 10c, 10d, 10e), souples et déformables.

5. Cadre de cycle (1) selon la revendication 4, **caractérisé en ce que** les profilés longitudinaux sont constitués par un assemblage de plusieurs gaines thermoplastiques (10a, 10b, 10c) de manière coaxiale à l'intérieur l'une de l'autre.

6. Cadre de cycle (1) selon la revendication 4, **caractérisé en ce que** les profilés longitudinaux (3) sont constitués par moulage de plusieurs ensembles de gaines (10a,10b) disposés côte à côte.

7. Cadre de cycle (1) selon l'une quelconque des revendications précédentes, **caractérisé en ce que** la forme et/ou les dimensions de la section transversale des profilés longitudinaux (3) varie(nt) longitudinalement le long desdits profilés.

8. Cadre de cycle (1) selon l'une quelconque des revendications précédentes, **caractérisé en ce que** la longueur des fils thermoplastiques parallèles discontinus (60) est comprise entre 60 et 200 mm.

9. Procédé de fabrication d'un cadre de cycle (1) qui comporte une étape qui consiste à réaliser des profilés longitudinaux en moulant à chaud un tissu thermoplastique selon l'une quelconque des revendications précédentes, **caractérisé en ce qu'**il comporte une étape principale qui consiste à mouler à chaud un tissu tressé (10), à partir de mèches (80) formées de fils de thermoplastique continus disposés en hélicoïde (50) autour de fils thermoplastiques parallèles discontinus (60).

10. Procédé de fabrication d'un cadre de cycle (1) selon la revendication 9, **caractérisé en ce qu'**il comporte une étape préliminaire qui consiste à enfiler des gaines en tissu thermoplastique (10) autour d'une baudruche gonflable pour permettre lors de l'étape principale un moulage à chaud et sous pression du tissu (10) pour réaliser les profilés longitudinaux (3).

11. Procédé de fabrication d'un cadre de cycle (1) selon la revendication 9 ou 10, **caractérisé en ce qu'**il consiste à réaliser séparément les profilés longitudinaux (3) et les raccords (4) avant de les assembler dans une étape finale.

12. Procédé de fabrication d'un cadre de cycle (1) selon la revendication 9 ou 10, **caractérisé en ce que** la réalisation des profilés longitudinaux (3) et leur assemblage à l'aide des raccords (4) s'effectue en une seule et unique opération principale.

13. Procédé de fabrication d'un cadre de cycle (1) selon la revendication 12, **caractérisé en ce que** l'opération principale consiste à disposer dans un moule (21) des raccords (4) préexistants pour ensuite mouler à chaud dans ledit moule les profilés longitudinaux (3) en les assemblant simultanément aux raccords (4).

## Patentansprüche

1. Fahrradrahmen (1), gebildet durch einen Aufbau aus Längsprofilen (3), die untereinander durch Verbindungsstücke (4) verbunden sind, wobei die Längsprofile (3) aus geformtem thermoplastischem Polymer auf Grundlage eines Gewebes bestehen, **dadurch gekennzeichnet, dass** das Gewebe (10) ein geflochtenes Stranggewebe (80) ist, das um diskontinuierliche, parallele thermoplastische Fasern kontinuierliche, spiralförmig angeordnete thermoplastische Fasern (60) umfasst.

2. Fahrradrahmen nach Anspruch 1, **dadurch gekennzeichnet, dass** das thermoplastische Polymer durch Kohlenstoff-, Glas- oder Aramidfasern (70) gebildete Verstärkungen umfasst, die zwischen den diskontinuierlichen, parallelen thermoplastischen Fasern (60) angeordnet sind, die durch die die Stränge bildenden, spiralförmig (50) angeordneten thermoplastischen Fasern eingeschlossen sind.

3. Fahrradrahmen (1) nach einem der vorangehenden Ansprüche, **dadurch gekennzeichnet, dass** das geflochtene thermoplastische Polymer ausgewählt ist aus:
- Polyamid 12
- Polyamid 6
- Polyamid 6.6
- Polypropylen
- Polyethersulfon
- Polyetherimid
- Polyetheretherketon
- Polypherylensulfid
- Polyestern.

4. Fahrradrahmen (1) nach einem der vorangehenden Ansprüche, **dadurch gekennzeichnet, dass** das Gewebe (10) zur Bildung von elastischen und verformbaren Mänteln (10a, 10b, 10c, 10d, 10e) aus geflochtenen thermoplastischen Fasern geflochten ist.

5. Fahrradrahmen (1) nach Anspruch 4, **dadurch gekennzeichnet, dass** die Längsprofile durch einen Aufbau aus mehreren thermoplastischen Mänteln (10a, 10b, 10c) gebildet sind, die koaxial ineinander angeordnet vorliegen.

6. Fahrradrahmen (1) nach Anspruch 4, **dadurch gekennzeichnet, dass** die Längsprofile durch Formen mehrerer Aufbauten aus Mänteln (10a, 10b) gebildet sind, die nebeneinander liegen.

7. Fahrradrahmen (1) nach einem der vorangehenden Ansprüche, **dadurch gekennzeichnet, dass** die Form und/oder die Abmessungen des Querschnitts der Längsprofile (3) in Längsrichtung entlang den Profilen variiert bzw. variieren.

8. Fahrradrahmen (1) nach einem der vorangehenden Ansprüche, **dadurch gekennzeichnet, dass** die Länge der diskontinuierlichen thermoplastischen parallelen Fasern (60) zwischen 60 und 200 mm beträgt.

9. Verfahren zur Herstellung eines Fahrradrahmens (1), aufweisend einen Schritt, der darin besteht, Längsprofile durch Heißformen eines thermoplastischen Gewebes nach einem der vorangehenden Ansprüche zu erzeugen, **dadurch gekennzeichnet, dass** es einen Hauptschritt umfasst, der darin besteht, durch Heißformen ein geflochtenes Gewebe (10) ausgehend von Strängen (80) zu formen, die aus kontinuierlichen thermoplastischen Fasern (50) gebildet sind, die spiralförmig (50) um diskontinuierliche, parallele thermoplastische Fasern (60) angeordnet sind.

10. Verfahren zur Herstellung eines Fahrradrahmens (1) nach Anspruch 9, **dadurch gekennzeichnet, dass** es einen vorbereitenden Schritt umfasst, der darin besteht, Mäntel (10) aus thermoplastischem Gewebe um eine aufblasbare Golfschlägerhaut aufzufädeln, um im Hauptschritt eine Heißformung des Gewebes (10) unter Druck zu ermöglichen, um die Längsprofile (3) zu erzeugen.

11. Verfahren zur Herstellung eines Fahrradrahmens (1) nach Anspruch 9 oder 10, **dadurch gekennzeichnet, dass** es darin besteht, die Längsprofile (3) und die Verbindungsstücke (4) getrennt zu erzeugen, bevor sie in einem abschließenden Schritt zusammengebaut werden.

12. Verfahren zur Herstellung eines Fahrradrahmens (1) nach Anspruch 9 oder 10, **dadurch gekennzeichnet, dass** die Erzeugung der Längsprofile (3) und deren Zusammenbau mit Hilfe der Verbindungsstücke (4) in einem einzigen und einheitlichen Hauptarbeitsablauf erfolgt.

13. Verfahren zur Herstellung eines Fahrradrahmens (1) nach Anspruch 12, **dadurch gekennzeichnet, dass** der Hauptarbeitsablauf darin besteht, in einer Form (21) bereits existierende Verbindungsstücke (4) anzuordnen, woraufhin die Längsprofile (3) in der Form heißgeformt werden, indem sie gleichzeitig mit den Verbindungsstücken (4) zusammengebaut werden.

## Claims

1. Bicycle frame (1) of the type consisting of a set of longitudinal sections (3) interconnected by joints (4), the said longitudinal sections (3) being made from thermoplastic polymer moulded from a textile, **characterized in that** the said textile (10) is a textile braided from strands (80) comprising continuous thermoplastic fibres arranged helicoidally (50) around discontinuous parallel thermoplastic fibres (60).

2. Bicycle frame (1) according to Claim 1, **characterized in that** the thermoplastic polymer comprises reinforcements consisting of carbon, glass or aramid fibres (70) positioned among the discontinuous parallel thermoplastic fibres (60) trapped by the helicoidally arranged thermoplastic fibres (50) forming the strands.

3. Bicycle frame (1) according to any one of the preceding claims, **characterized in that** the braided thermoplastic polymer is chosen from:
- polyamide 12
- polyamide 6
- polyamide 6.6
- polypropylene
- polyethersulfone
- polyetherimide
- polyether ketone
- polyphenylene sulfide
- polyesters

4. Bicycle frame (1) according to any one of the preceding claims, **characterized in that** the textile (10) is braided to form flexible and deformable sleeves of braided thermoplastic fibres (10a, 10b, 10c, 10d, 10e).

5. Bicycle frame (1) according to Claim 4, **characterized in that** each of the longitudinal sections consists of an assembly of a plurality of thermoplastic sleeves (10a, 10b, 10c) positioned coaxially one inside another.

6. Bicycle frame (1) according to Claim 4, **characterized in that** the longitudinal sections (3) are formed by moulding a plurality of sets of sleeves (10a, 10b) positioned side by side.

7. Bicycle frame (1) according to any one of the preceding claims, **characterized in that** the shape and/or the dimensions of the cross section of the longitudinal sections (3) vary longitudinally along the said sections.

8. Bicycle frame (1) according to any one of the preceding claims, **characterized in that** the length of the discontinuous parallel thermoplastic fibres (60) is in the range from 60 to 200 mm.

9. Process for manufacturing a bicycle frame (1) which comprises a stage which consists of the forming of longitudinal sections by hot moulding a thermoplastic textile according to any one of the preceding claims, **characterized in that** it comprises a principal stage which consists of the hot moulding of a textile (10) braided from strands (80) formed from continuous thermoplastic fibres arranged helicoidally (50) around discontinuous parallel thermoplastic fibres (60).

10. Process for manufacturing a bicycle frame (1) according to Claim 9, **characterized in that** it comprises a preliminary stage which consists of the fitting of thermoplastic textile sleeves (10) around an inflatable bladder to enable the textile (10) to be hot moulded under pressure in the principal stage to form the longitudinal sections (3).

11. Process for manufacturing a bicycle frame (1) according to Claim 9 or 10, **characterized in that** it consists of the separate forming of the longitudinal sections (3) and the joints (4) and their subsequent assembly in a final stage.

12. Process for manufacturing a bicycle frame (1) according to Claim 9 or 10, **characterized in that** the forming of the longitudinal sections (3) and their assembly with the aid of the joints (4) are carried out in a single principal operation.

13. Process for manufacturing a bicycle frame (1) according to Claim 12, **characterized in that** the principal operation consists of the positioning of pre-existing joints (4) in a mould (21) followed by the hot-moulding of the longitudinal sections (3) in the said mould while they are simultaneously assembled together with the joints (4).
